# EUROPÄISCHE PATENTSCHRIFT

(11) **EP 4 373 720 B1**
(45) Veröffentlichungstag und Bekanntmachung des Hinweises auf die Patenterteilung: **19.11.2025**
(21) Anmeldenummer: 22734605.3
(22) Anmeldetag: 22.06.2022
(51) Int. Cl.: B60T 13/38, B60T 13/66, B60T 13/68, B60T 17/22

(54) **ELEKTROPNEUMATISCHE FESTSTELLBREMSEINHEIT MIT SELBSTHALTUNG IM FEHLERFALL**
ELECTROPNEUMATIC PARKING BRAKE UNIT WITH A SELF-SUPPORTING FUNCTION IN THE EVENT OF A FAULT
UNITÉ DE FREIN DE STATIONNEMENT ÉLECTROPNEUMATIQUE DOTÉE D'UNE FONCTION D'AUTO-ASSISTANCE EN CAS DE DÉFAILLANCE

(30) Priorität: 21.07.2021 DE 102021118895
(43) Veröffentlichungstag der Anmeldung: 29.05.2024
(73) Patentinhaber: ZF CV Systems Global GmbH, 3006 Bern (CH)
(72) Erfinder: VAN THIEL, Julian, 30938 Grossburgwedel (DE)
(74) Vertreter: Rabe, Dirk-Heinrich
(86) Internationale Anmeldenummer: PCT/EP2022/066998
(87) Internationale Veröffentlichungsnummer: WO 2023/001473

(56) Entgegenhaltungen:
- DE-A1- 102014 107 278
- DE-A1- 102017 005 757
- DE-A1- 102017 009 374

## Beschreibung

Die Erfindung betrifft eine elektropneumatische Ventilanordnung zur Betätigung einer Feststellbremsfunktion eines elektropneumatischen Bremssystems eines Nutzfahrzeugs, mit einer bistabilen Vorsteuereinheit mit einem elektromagnetischen Magnetventil mit einem ersten Elektromagneten und einem zweiten Elektromagneten, wobei die Vorsteuereinheit in Abhängigkeit von einem elektronischen Feststellbremssignal einen Vorsteuerdruck aussteuert, und eine Hauptventileinheit, die den Vorsteuerdruck empfängt und in Abhängigkeit vom Vorsteuerdruck einen Parkbremsdruck an wenigstens einem Federspeicheranschluss aussteuert. Die Erfindung betrifft ferner ein Verfahren zum Steuern einer Parkbremsfunktion eines Nutzfahrzeugs mit einem elektropneumatischen Bremssystem sowie ein Nutzfahrzeug mit einem elektronisch steuerbaren pneumatischen Bremssystem.

Elektropneumatische Ventilanordnungen zum Betätigen einer Feststellbremsfunktion werden sowohl im europäischen als auch im US-amerikanischen Raum eingesetzt. Eine Feststellbremsfunktion eines elektropneumatischen Bremssystems nutzt in der Regel sogenannte Federspeicherbremszylinder, die aufgrund einer Federkraft zuspannen und im belüfteten Zustand geöffnet sind. Während der Fahrt sollen dieser Federspeicherbremszylinder also belüftet und damit geöffnet sein, während sie im geparkten Zustand des Fahrzeugs entlüftet werden und damit zuspannen.

Eine Lösung, um derartige Federspeicherbremszylinder zu belüften, ist in DE 10 2017 005 757 A1 offenbart. Die dort offenbarte Lösung nach dem Oberbegriff des Anspruchs 1 nutzt eine Vorsteuereinheit sowie eine Hauptventileinheit, wobei die Vorsteuereinheit ein elektromagnetisches Magnetventil in Form eines Bistabilventils umfasst. Die Hauptventileinheit ist in der dort offenbarten Lösung durch ein Relaisventil gebildet. Je nach Schaltstellung des elektromagnetischen Bistabilventils wird ein Steuerdruck an der Hauptventileinheit ausgesteuert, die dann in entsprechender Weise einen Volumendruck für die Federspeicherbremszylinder aussteuert. Als Bistabilventil wird ein Magnetventil bezeichnet, welches zwei stabile Schaltstellungen, insbesondere eine stabile Belüftungsstellung und eine stabile Entlüftungsstellung hat. Zu diesem Zweck können ein oder zwei Spulen und ein oder zwei Permanentmagnete vorgesehen sein. Sind zwei Spulen vorgesehen, kann durch Bestromen einer ersten Spule ein Anker des Magnetventils, der vorzugsweise einen Permanentmagneten trägt, in eine erste Stellung verbracht werden, sodass das Magnetventil die Belüftungsstellung einnimmt und durch Bestromen einer zweiten Spule der Anker des Magnetventils in eine zweite Stellung verbracht werden, sodass das Magnetventil die Entlüftungsstellung einnimmt. Beide Endpositionen bilden Raststellungen, in denen das Magnetventil magnetisch verrastet ist. Wenn dann keine andere Kraft auf den Anker wirkt, oder dieser in den Stellungen mechanisch und/oder magnetisch verrastbar ist, ist die jeweilige Schaltstellung stabil, da sie ohne weitere Bestromung aufrechterhalten bleiben kann.

Im US-amerikanischen Raum hingegen werden sogenannte Push-Pull-Ventile in der Fahrerkabine eingesetzt, über die der Fahrer manuell die Belüftung bzw. Entlüftung der Federspeicherbremszylinder bewirken kann. Wird das Push-Pull-Ventil hineingedrückt, wird eine pneumatische Verbindung hergestellt, sodass die Federspeicherbremszylinder des Zugfahrzeugs belüftet und damit gelöst werden. Zieht der Fahrer hingegen das Push-Pull-Ventil heraus, werden die Federspeicherbremszylinder entlüftet und spannen zu. Eine Lösung, die bereits ein pneumatisches Schalten der Push-Pull-Ventile zulässt, ist in DE 10 2018 108 202 A1 offenbart.

Da der Aufwand der pneumatischen Verrohrung von den entsprechenden Ventilen, die die Parkbremsfunktion umsetzen, den Federspeicherbremszylindern, die üblicherweise an der Hinterachse vorgesehen sind, sowie der Fahrerkabine relativ hoch ist, besteht ein Bedarf, dies zu vereinfachen. Zudem besteht der Bedarf, die Sicherheit derartiger Push-Pull-Ventile zu verbessern.

Eine weitere Lösung, die eine pneumatische Bistabilität bzw. eine Selbsthaltung erzeugt und damit ein stabiles Einlegen der Parkbremse ermöglicht auch ohne weitere Bestromung eines elektromagnetischen Ventils, ist in WO 2019/030242 A1 offenbart. Die dort offenbarte Lösung nutzt als Hauptventileinheit ein pneumatisch schaltbares 3/2-Wegeventil und als Vorsteuereinheit zwei elektrisch schaltbare 3/2-Wegeventile, wobei eines der elektrisch schaltbaren 3/2-Wegeventile den von der Hauptventileinheit ausgesteuerten Druck rückführt und einen pneumatischen Steueranschluss der Hauptventileinheit aussteuert. Hierdurch wird eine pneumatische Selbsthaltung für den Fall realisiert, in dem die Hauptventileinheit einen pneumatischen Druck aussteuert. Tritt nun ein Fehler auf, oder wird der Vorrat, der die Hauptventileinheit mit Vorratsdruck versorgt, leergepumpt, wird auch kein Druck mehr von der Hauptventileinheit ausgesteuert, sodass die Hauptventileinheit monostabil in eine andere Schaltstellung wechselt, in der der entsprechende Federspeicheranschluss entlüftet wird. Auch wenn der entsprechende Druckluftvorrat wieder gefüllt werden sollte, beispielsweise durch einen Servicetechniker oder weil das Fahrzeug wieder Strom hat, wird die Parkbremse nicht automatisch wieder gelöst, da sich die Hauptventileinheit in der Entlüftungsstellung befindet und kein pneumatischer Druck rückgeführt wird.

Diese speziell für den US-Markt vorgesehene Lösung ist allerdings je nach Bauart des Fahrzeugs nicht ohne Weiteres in Europa einsetzbar. Zudem besteht Bedarf, auch weitere Funktionalitäten umsetzen zu können und insofern eine verbesserte Ventilanordnung bereitzustellen, sowie nach Möglichkeiten Synergien zwischen einzelnen Produkten schaffen zu können.

Die Aufgabe wird in einem ersten Aspekt der Erfindung bei einer elektropneumatische Ventilanordnung der eingangs genannten Art dadurch gelöst, dass das Magnetventil einen Sicherheitssteueranschluss zum Empfangen eines Sicherheitssteuerdrucks aufweist, wobei das Magnetventil in Abhängigkeit vom Sicherheitssteuerdruck die Vorsteuereinheit mit Vorratsdruck versorgt oder diese mit einer Entlüftung verbindet, wobei der Sicherheitssteuerdruck ein von dem Magnetventil ausgesteuerter Druck oder ein davon abgeleiteter Druck ist. Auf diese Weise kann erreicht werden, dass das Magnetventil nicht zwingend in einer durch den wenigstens einen Permanentmagneten bewirkten Raststellung verharrt, wenn sich der vom Magnetventil ausgesteuerte Druck ändert.

Bei Lösungen, die im Rahmen von elektropneumatischen Ventilanordnungen zum Betätigen der Feststellbremsfunktion ein Magnetventil in Form eines herkömmlichen Bistabilventils benutzen, besteht die Gefahr, dass das Magnetventil auch nach einem Fehler des Fahrzeugs aufgrund der Magnetkraft, die der wenigstens eine Permanentmagnet ausübt, in einer Belüftungsstellung verharrt. Wird das Fahrzeug nach einem Fehler abgestellt und infolgedessen der Druckluftvorrat geleert, werden die Federspeicherbremszylinder zugespannt, auch ohne dass das Magnetventil in die Entlüftungsstellung gebracht wird. Es kann also aufgrund seiner zwei magnetischen Raststellungen, nämlich der Belüftungsstellung und der Entlüftungsstellung, in der Belüftungsstellung verharren. Wird nun das Fahrzeug wieder mit Strom versorgt und infolgedessen der Druckluftvorrat aufgefüllt oder der Druckluftvorrat auf andere Weise wieder aufgefüllt, kann es dazu kommen, dass die Federspeicherbremszylinder belüftet und dadurch gelöst werden, was zum ungewollten Wegrollen des Fahrzeugs führen kann. Um dies zu verhindern, ist es bekannt, das Magnetventil, nachdem die Federspeicherbremszylinder belüftet wurden, in eine Entlüftungsstellung zu bringen, wobei der von dem Magnetventil ausgesteuerte Druck durch ein anderes, weiteres Ventil wie beispielsweise ein 2/2-Wegeventil, eingesperrt wird.

Für den Fall, dass in dieser Gestaltung das Bremssystem stromlos geschaltet wird oder ein Steuermodul ausfällt, fällt das weitere Ventil monostabil in eine Öffnungsstellung zurück. Das Magnetventil ist zu diesem Zeitpunkt noch in der Entlüftungsstellung, sodass für diesen Fall dann die Federspeicherbremszylinder entlüftet werden können. Auch ein erneutes Auffüllen des Druckluftvorrats führt in diesem Fall nicht automatisch zum Belüften der Federspeicherbremszylinder. Dennoch kann es auch in solchen Situationen vorkommen, dass ein Fehler auftritt, bevor das Magnetventil zurück in die Entlüftungsstellung gebracht wird, sodass das oben beschriebene Problem des Belüftens der Federspeicherbremszylinder bei Wiederherstellen des Vorratsdrucks auftauchen kann.

Erfindungsgemäß wird daher die Schaltstellung des Magnetventils nicht nur von der elektromagnetisch eingestellten Schaltstellung abhängig gemacht, sondern auch vom Aussteuern des Sicherheitssteuerdrucks, also von dem durch das Magnetventil ausgesteuerten Druck. Hierdurch wird eine weitere Sicherheitsebene bereitgestellt. Vorzugsweise ist vorgesehen, dass, sobald der Sicherheitssteuerdruck unter einen ersten vorbestimmten Schwellwert sinkt, das Magnetventil unabhängig von elektromagnetischen Schaltsignalen in eine Entlüftungsstellung verbracht wird. Dies kann pneumatisch, mechanisch oder auf sonstige Weise erfolgen. Vorzugsweise erfolgt dies unabhängig von einer Bestromung.

Der Sicherheitssteuerdruck ist ein von dem Magnetventil ausgesteuerter Druck oder ein davon abgeleiteter Druck. Beispielsweise kann unmittelbar an einem Anschluss des Magnetventils eine Rückführleitung oder eine Rückführbohrung vorgesehen sein, die den vom Magnetventil ausgesteuerten Druck als Sicherheitssteuerdruck an dem Sicherheitssteueranschluss bereitstellt. Es kann aber auch vorgesehen ein, dass eine Rückführleitung unmittelbar vor der Hauptventileinheit oder auch erst stromabwärts von dieser abzweigt, beispielsweise vor oder am Federspeicheranschluss. Der Parkbremsdruck ist ein von dem Magnetventil ausgesteuerter abgeleiteter Druck.

In einer ersten bevorzugten Ausführungsform weist das Magnetventil einen den Vorratsdruck empfangenden ersten Magnetventilanschluss, einen den Vorsteuerdruck aussteuernden zweiten Magnetventilanschluss und einen mit einer Entlüftung verbundenen dritten Magnetventilanschluss auf. Vorzugsweise ist in einer Belüftungsstellung oder ersten Schaltstellung des Magnetventils der erste Magnetventilanschluss mit dem zweiten Magnetventilanschluss verbunden und in einer Entlüftungsstellung oder zweiten Schaltstellung des Magnetventils ist der dritte Magnetventilanschluss mit dem zweiten Magnetventilanschluss verbunden. Durch Bestromen von wenigstens einer Spule kann das Magnetventil wahlweise in die Belüftungsstellung oder die Entlüftungsstellung geschaltet werden, wobei das Magnetventil mittels des wenigstens einen Permanentmagneten magnetisch in der jeweiligen Schaltstellung gehalten werden kann. Vorzugsweise ist ferner vorgesehen, dass für den Fall, dass der Sicherheitssteuerdruck einen ersten Schwellwert unterschreitet, das Magnetventil unabhängig von einer vorherigen Schaltstellung in die Entlüftungsstellung geschaltet wird. Hierdurch wird sichergestellt, dass das Magnetventil auch stromlos und auch bei einem Fehler in der Entlüftungsstellung ist und ein Wiederherstellen eines Vorratsdrucks nicht unmittelbar zum Lösen von Federspeicherbremszylindern führt. Das Magnetventil kann grundsätzlich eine Spule und einen Permanentmagneten aufweisen, der dann vorzugsweise im Anker des Magnetventils angeordnet ist. Durch entsprechende Bestromung der einen Spule kann der Anker samt Permanentmagnet in die eine oder andere Richtung bewegt werden, wobei er bei Anlage an einen entsprechenden Ventilsitz den Anker dort magnetisch verrastet, sodass das Magnetventil zwei magnetische Raststellungen hat. Es können in Varianten aber auch zwei Spulen und ein Permanentmagnet, zwei Spulen und zwei Permanentmagnete oder eine Spule und zwei Permanentmagnete vorgesehen sein. Wenn zwei Permanentmagnete verwendet werden, sind diese vorzugsweise an einem Ventilgehäuse befestigt und wirken jeweils auf den Anker, sodass sie den Anker wiederum in seinen Endlagen magnetisch halten und so verrasten. Es können jeweils auch mehr als zwei Spulen und Permanentmagnete vorgesehen sein.

Weiterhin ist bevorzugt, dass für den Fall, dass der Sicherheitssteuerdruck den ersten Schwellwert überschreitet, das Magnetventil in der vorherigen Schaltstellung gehalten wird, und vorzugsweise durch Bestromen der wenigstens einen Spule wahlweise in die Belüftungsstellung oder Entlüftungsstellung geschaltet werden kann. Es ist also vorzugsweise vorgesehen, dass, wenn der Sicherheitssteuerdruck den ersten Schwellwert überschreitet, das Magnetventil in der Be- oder Entlüftungsstellung gehalten werden kann, je nachdem in welche dieser Stellungen das Magnetventil elektromagnetisch geschaltet würde. Es kann aber auch vorgesehen sein, dass das Magnetventil in die Belüftungsschaltstellung geschaltet wird.

Vorzugsweise wird für den Fall, dass der Sicherheitssteuerdruck einen zweiten Schwellwert überschreitet, der vorzugsweise höher als der erste Schwellwert ist, das Magnetventil in die Belüftungsstellung geschaltet. Vorzugsweise kann das Magnetventil in diesem Fall durch Bestromen der wenigstens einen Spule in die Entlüftungsstellung geschaltet werden. Übersteigt der Sicherheitssteuerdruck den zweiten Schwellwert, kann dies nicht nur ein Beibehalten der Schaltstellung, sondern ein aktives Schalten des Magnetventils in die Belüftungsstellung bewirken. Dazu übersteigt die Kraft, die durch den Sicherheitssteuerdruck ausgeübt wird vorzugsweise eine magnetische Haltekraft bzw. Rastmoment, die von dem wenigsten einen Permanentmagneten ausgeübt werden. Dennoch ist vorzugsweise vorgesehen, dass durch Bestromen der wenigstens einen Spule das Magnetventil in die Entlüftungsstellung geschaltet werden kann. Wenn die Spule bestromt wird, wird auf den Anker eine zusätzliche Kraft ausgeübt, die wiederum die durch den Sicherheitssteuerdruck ausgeübte Kraft übersteigen kann, sodass der Anker in die andere Schaltstellung verbracht wird. Durch Bestromen der wenigstens einen Spule kann also die Aussteuerung des Sicherheitssteuerdrucks oberhalb des zweiten Schwellwerts übersteuert werden, um die Entlüftungsstellung zwangsweise einzunehmen.

Der erste Schwellwert ist vorzugsweise in einem Bereich von 200 kPa bis 400 kPa vorgesehen, weiter bevorzugt 250 kPa bis 350 kPa. Diese Werte sollten unterhalb des üblichen Werts des Vorratsdrucks liegen. Der zweite Schwellwert liegt vorzugsweise in einem Bereich von 500 kPa bis 900 kPa, vorzugsweise 600 kPa bis 800 kPa.

Weiterhin ist bevorzugt, dass das Magnetventil eine Vorzugsstellung aufweist. Das heißt, das Magnetventil ist vorzugsweise in eine der ersten und zweiten Schaltstellungen, vorzugsweise die Entlüftungsstellung, vorgespannt. Vorzugsweise ist die Vorsteuereinheit in der Vorzugsstellung mit der Entlüftung verbunden. Es kann vorgesehen sein, dass das Aussteuern des Sicherheitssteuerdrucks oberhalb des ersten Schwellwerts die Vorzugsstellung aufhebt. Sobald der Sicherheitssteuerdruck den ersten Schwellwert überschreitet, hat das Magnetventil vorzugsweise keine Vorzugsstellung mehr. Unterschreitet jedoch der Sicherheitssteuerdruck den ersten Schwellwert, hat das Magnetventil die Vorzugsstellung und schaltet stromlos in die Vorzugsstellung, nämlich vorzugsweise in die Entlüftungsstellung. Die Vorzugsstellung kann beispielsweise durch eine Federbelastung des Magnetventils in die Vorzugsstellung realisiert werden. Auf diese Weise ist sichergestellt, dass das Magnetventil mechanisch in die Vorzugsstellung belastet ist und bei Unterschreiten des Sicherheitssteuerdrucks in diese Vorzugsstellung verbracht wird. Der Sicherheitssteuerdruck wirkt in diesem Fall also der Federkraft entgegen.

In einer weiteren bevorzugten Ausführungsform ist ein Notlöseanschluss vorgesehen, mit einem Notlösepfad zum Einsteuern eines Notlösedrucks, der die Aussteuerung des Parkbremsdrucks am wenigstens einen Federspeicheranschluss bewirkt. Der Notlöseanschluss dient insbesondere dazu, manuell oder von einer weiteren Druckquelle den Notlösedruck anzusteuern, um den Parkbremsdruck am wenigstens einen Federspeicheranschluss auszusteuern. Hierdurch können dann über die Aussteuerung des Notlösedrucks der oder die Federspeicherbremszylinder belüftet und gelöst werden. Dies kann erforderlich und hilfreich sein, wenn sich das Nutzfahrzeug in einem stromlosen oder defekten Zustand befindet und der den Federspeicheranschluss versorgende Druckluftvorrat keinen ausreichenden Druck oder kein ausreichendes Volumen bereitstellen kann. Auf diese Weise kann beispielsweise ein Servicetechniker den Notlösedruck aussteuern, beispielsweise über einen Vorrat, der in einem Servicefahrzeug vorhanden ist, und so den oder die Federspeicherbremszylinder lösen.

In einer Variante versorgt das Magnetventil in Abhängigkeit vom Notlösedruck die Vorsteuereinheit mit Vorratsdruck oder verbindet diese mit der Entlüftung. Beispielsweise kann der Notlösepfad in einen Entlüftungspfad des Magnetventils münden. So ist es beispielsweise denkbar und bevorzugt, dass der Notlösepfad über ein Rückschlagventil oder ein Doppelrückschlagventil in den Entlüftungspfad mündet, um so über den Entlüftungspfad des Magnetventils einen Steuerdruck auszusteuern. Das Magnetventil soll sich im stromlosen Zustand bzw. drucklosen Zustand des Fahrzeugs in der Entlüftungsstellung befinden und die Vorsteuereinheit mit der Entlüftung verbinden. Das heißt, in dieser Schaltstellung kann über den Entlüftungspfad der Notlösedruck eingesteuert werden, um der Vorsteuereinheit auf diese Weise den entsprechenden Steuerdruck bereitzustellen. Dies kann dann wiederum die Aussteuerung des Parkbremsdrucks bewirken.

Weiter ist bevorzugt, dass der Notlösedruck über den Notlösepfad an dem Sicherheitssteueranschluss des Magnetventils oder einem weiteren Steueranschluss des Magnetventils ausgesteuert wird. Hierdurch lässt sich das Magnetventil wieder in die erste Schaltstellung bringen, in der das Magnetventil vorzugsweise in einer Belüftungsstellung ist, um so an der Hauptventileinheit einen Vorsteuerdruck auszusteuern. Hierzu kann der Notlösedruck an demselben Sicherheitssteueranschluss des Magnetventils ausgesteuert werden, an dem auch der Sicherheitssteuerdruck ausgesteuert wird, oder einem separaten, hierfür vorgesehenen, weiteren Steueranschluss. Beides kann die Auslösung der Vorzugsstellung bewirken und/oder das Magnetventil in die Belüftungsstellung schalten.

In einer weiteren bevorzugten Ausführungsform ist vorgesehen, dass für den Fall, dass der Notlösedruck einen oder den zweiten Schwellwert überschreitet, das Magnetventil in die Belüftungsstellung geschaltet wird. Gemäß dieser Ausführungsform wird also nicht nur die Vorzugsstellung aufgehoben, sondern entgegen der Vorzugsstellung die Belüftungsstellung eingenommen. Vorzugsweise ist aber auch hier vorgesehen, dass die durch eine entsprechende Bestromung der wenigstens einen Spule übersteuert und so das Magnetventil trotz des Notlösedrucks oberhalb des zweiten Schwellwerts in die Entlüftungsstellung geschaltet werden kann.

Weiterhin ist bevorzugt, dass die elektropneumatische Ventilanordnung in ein Modul integriert ist, welches vorzugsweise einen oder mehrere Vorratsanschlüsse aufweist, den Federspeicheranschluss, eine Entlüftung und gegebenenfalls einen Notlöseanschluss. Ein solches Modul kann insbesondere als Feststellbremsmodul oder Parkbremsmodul ausgebildet sein. Vorzugsweise verfügt ein derartiges Modul über eine eigene elektronische Steuereinheit, die beispielsweise über einen Fahrzeug-BUS, einen sonstigen BUS oder eine direkte Verkabelung, ein oder mehrere Signale einer übergeordneten Steuereinheit empfangen kann. Die elektronische Steuereinheit des Moduls kann dann ein oder mehrere Schaltsignale an das oder die elektromagnetisch schaltbaren Ventile ausgeben, um eine Schaltung zu bewirken. Es kann aber auch vorgesehen sein, dass die einzelnen elektromagnetischen Ventile der elektropneumatischen Ventilanordnung über eine direkte Signalaussteuerung einer übergeordneten Steuereinheit geschaltet werden. Eine übergeordnete Steuereinheit kann insbesondere eine Zentraleinheit, eine Fahrzeugsteuereinheit oder dergleichen sein.

In einem zweiten Aspekt wird die eingangs genannte Aufgabe gelöst durch ein Verfahren zum Steuern einer Parkbremsfunktion eines Nutzfahrzeugs mit einem elektropneumatischen Bremssystem und vorzugsweise einer elektropneumatischen Ventilanordnung nach einer der vorstehend beschriebenen bevorzugten Ausführungsformen einer elektropneumatischen Ventilanordnung gemäß dem ersten Aspekt der Erfindung, mit den Schritten: elektromagnetisches Schalten eines elektromagnetischen Magnetventils mit wenigstens einem ersten Permanentmagneten von einer Entlüftungsstellung in eine Belüftungsstellung zum Aussteuern eines Parkbremsdrucks an wenigstens einem Federspeicheranschluss zum Belüften von wenigstens einem Federspeicherbremszylinder, Einsperren eines vom Magnetventil ausgesteuerten Vorsteuerdrucks und/oder Halten des Magnetventils in der Belüftungsstellung, und bei Absinken eines dem Magnetventil bereitgestellten Vorratsdrucks unter einen ersten Schwellwert: pneumatisches oder mechanisches Schalten des Magnetventils in die Entlüftungsstellung.

Es soll verstanden werden, dass das Verfahren gemäß dem zweiten Aspekt sowie die elektropneumatische Ventilanordnung gemäß dem ersten Aspekt der Erfindung gleiche und ähnliche Unteraspekte aufweisen, wie sie insbesondere in den abhängigen Ansprüchen niedergelegt sind. Insofern wird vollumfänglich auf die obige Beschreibung zum ersten Aspekt der Erfindung verwiesen.

Das elektromagnetische Schalten des Magnetventils von einer Entlüftungsstellung in eine Belüftungsstellung erfolgt vorzugsweise durch Bestromen wenigsten einer Spule. Durch Bestromen der wenigstens einen Spule und ggf. einer weiteren Spule kann das Magnetventil wahlweise in die Be- oder Entlüftungsstellung geschaltet werden.

Bevorzugt ist bei dem Verfahren vorgesehen, dass das Magnetventil eine Vorzugsstellung aufweist, die durch Aussteuern eines Sicherheitssteuerdrucks an einem Sicherheitssteueranschluss des Magnetventils aufgehoben werden kann. Das heißt, wenn kein oder ein zu geringer Sicherheitssteuerdruck an dem Sicherheitssteueranschluss ausgesteuert ist, hat das Magnetventil die Vorzugsstellung, wenn der Sicherheitssteuerdruck den ersten Schwellwert überschreitet, wird diese Vorzugsstellung aufgehoben bzw. ausgeglichen, sodass das Magnetventil dann keine Vorzugsstellung hat.

Vorzugsweise umfasst das Verfahren ferner den Schritt: Aussteuern eines Sicherheitssteuerdrucks an einem Sicherheitssteueranschluss des Magnetventils zum Halten des Magnetventils in der Entlüftungsstellung oder zum Schalten des Magnetventils in die Entlüftungsstellung, wobei der Sicherheitssteuerdruck ein von dem Magnetventil ausgesteuerter oder davon abgeleiteter Druck ist. Der Sicherheitssteuerdruck überschreitet hierzu vorzugsweise den ersten Schwellwert.

Das Verfahren kann den Schritt umfassen: Aussteuern eines Notlösedrucks zum Aussteuern des Parkbremsdrucks an dem wenigstens einen Federspeicheranschluss. Der Notlösedruck kann in einen Entlüftungspfad des Magnetventils eingesteuert werden. Zusätzlich oder alternativ kann der Notlösedruck auch an dem Sicherheitssteueranschluss des Magnetventils oder einem weiteren Steueranschluss des Magnetventils ausgesteuert werden. Überschreitet der am Sicherheitssteueranschluss ausgesteuerte Sicherheitssteuerdruck oder Notlösedruck einen oder den zweiten Schwellwert, wird das Magnetventil vorzugsweise unabhängig von seiner vorherigen Schaltstellung in die Belüftungsstellung geschaltet. Auch in diesem Fall kann aber vorgesehen sein, dass durch Bestromen der wenigstens einen Spule das Magnetventil in die Entlüftungsstellung geschaltet werden kann.

In einem dritten Aspekt löst die Erfindung die eingangs genannte Aufgabe durch ein Nutzfahrzeug mit einem elektronisch steuerbaren pneumatischen Bremssystem, welches eine elektropneumatische Ventilanordnung nach einer der vorstehend beschriebenen bevorzugten Ausführungsformen einer elektropneumatischen Ventilanordnung gemäß dem ersten Aspekt der Erfindung aufweist. Vorzugsweise ist das Nutzfahrzeug dazu eingerichtet, das Verfahren gemäß dem zweiten Aspekt der Erfindung wenigstens teilweise auszuführen.

Es soll verstanden werden, dass die elektropneumatische Ventilanordnung gemäß dem ersten Aspekt der Erfindung, das Verfahren gemäß dem zweiten Aspekt der Erfindung sowie das Nutzfahrzeug gemäß dem dritten Aspekt der Erfindung gleiche und ähnliche Unteraspekte aufweisen, welche insbesondere in den abhängigen Ansprüchen niedergelegt sind. Insofern wird vollumfänglich auf die obige Beschreibung Bezug genommen. Die elektropneumatische Ventilanordnung gemäß dem ersten Aspekt der Erfindung kann in dem Nutzfahrzeug gemäß dem dritten Aspekt der Erfindung insbesondere in Form eines Parkbremsmoduls umgesetzt werden.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne vom Gegenstand der Ansprüche
Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Figur 1: ein erstes Ausführungsbeispiel einer elektropneumatischen Ventilanordnung;
- Figur 2: ein zweites Ausführungsbeispiel einer elektropneumatischen Ventilanordnung;
- Figur 3: ein drittes Ausführungsbeispiel einer elektropneumatischen Ventilanordnung; und in
- Figur 4: ein Nutzfahrzeug.

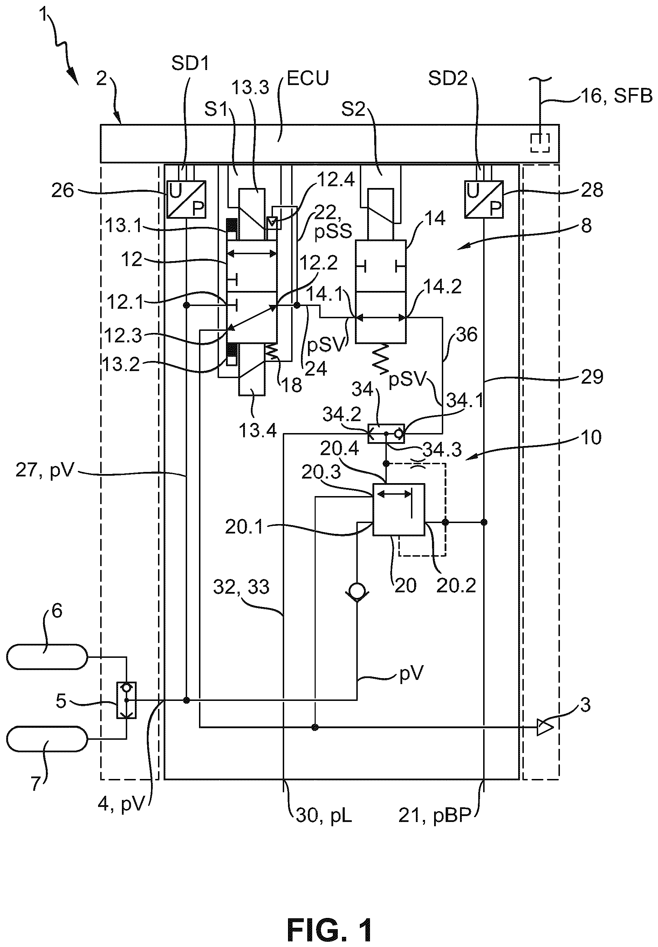

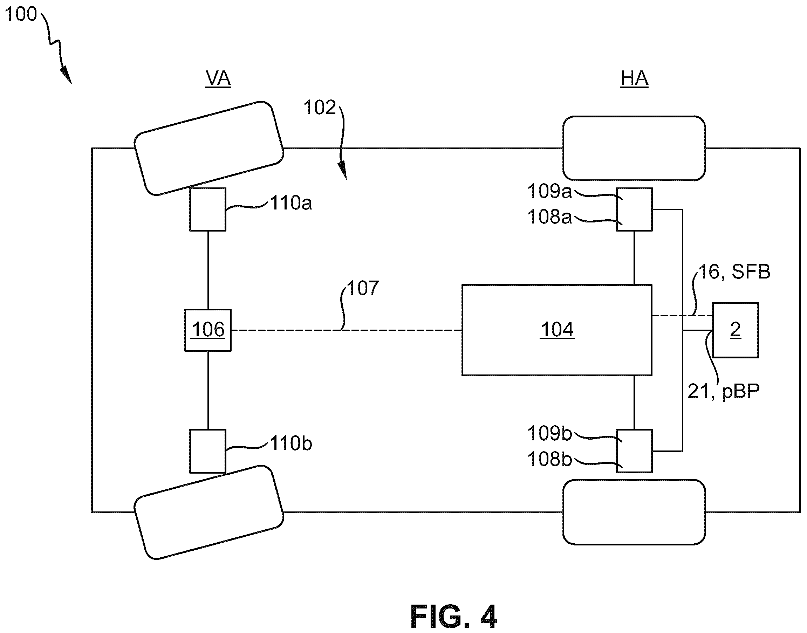

Eine elektropneumatische Ventilanordnung 1 ist in dem gezeigten Ausführungsbeispiel in den Fig. 1 bis 3 als Feststellbremsmodul 2 ausgebildet, wobei dies nicht zwingend erforderlich ist, und die elektropneumatische Ventilanordnung 1 vielmehr auch mit anderen Einheiten integriert sein kann und/oder die einzelnen im Nachfolgenden beschriebenen Ventile können auch separat und/oder verteilt in einem Bremssystem 102 (vgl. Fig. 4) angeordnet sein.

Das Feststellbremsmodul 2 weist einen Vorratsanschluss 4 auf, an den über ein Vorratswechselventil 5 ein erster Druckluftvorrat 6 und ein zweiter Druckluftvorrat 7 angeschlossen sind, die jeweils einen Vorratsdruck pV bereitstellen, sodass an dem Vorratsanschluss 4 der Vorratsdruck pV anliegt. Es ist nicht zwingend erforderlich, dass an den Vorratsanschluss 4 zwei Druckluftvorräte 6, 7 angeschlossen sind, vielmehr kann es auch ausreichen, wenn dort nur ein Druckluftvorrat angeschlossen ist, oder der Vorratsanschluss 4 über ein weiteres Modul versorgt wird.

Die elektropneumatische Ventilanordnung 1 weist eine bistabile Vorsteuereinheit 8 sowie eine Hauptventileinheit 10 auf. Die bistabile Vorsteuereinheit 8 weist ein elektromagnetisches Magnetventil 12 auf. Das Magnetventil 12 hat einen ersten Magnetventilanschluss 12.1, einen zweiten Magnetventilanschluss 12.3 und einen dritten Magnetventilanschluss 12.3. Der erste Magnetventilanschluss 12.1 ist mit dem Vorratsanschluss 4 verbunden und empfängt Vorratsdruck pV. Der zweite Magnetventilanschluss 12.2 ist mit der Hauptventileinheit 10 verbunden, in dem in Fig. 1 gezeigten Ausführungsbeispiel über ein Halteventil 14. Der dritte Magnetventilanschluss 12.3 ist mit einer Entlüftung 3 verbunden. Das Magnetventil 12 hat eine erste, in Fig. 1 nicht gezeigte Schaltstellung, in der der erste Magnetventilanschluss 12.1 mit dem zweiten Magnetventilanschluss 12.2 verbunden ist. In der in Fig. 1 gezeigten zweiten Schaltstellung ist der dritte Magnetventilanschluss 12.3 mit dem zweiten Magnetventilanschluss 12.2 verbunden. Insofern kann die erste Schaltstellung auch als Belüftungsstellung und die zweite Schaltstellung als Entlüftungsstellung bezeichnet werden. In der Belüftungsstellung wird über das Magnetventil 12 ein Vorsteuerdruck pSV ausgesteuert. Das Magnetventil 12 wird in Abhängigkeit von einem Feststellbremssignal SFB geschaltet, welches von dem Feststellbremsmodul 2 beispielsweise über einen Fahrzeug-BUS 16 empfangen wird oder auch unmittelbar an dem Magnetventil 12 bereitgestellt werden kann.

Das Magnetventil 12 weist einen ersten Permanentmagneten 13.1 und einen zweiten Permanentmagneten 13.2 auf. Darüber hinaus weist das Magnetventil 12 in der gezeigten Ausführungsform auch eine erste Spule 13.3 und eine zweite Spule 13.4 auf. In Abhängigkeit des Feststellbremssignals SFB wird entweder die erste Spule 13.3 oder die zweite Spule 13.3 bestromt. Wird die erste Spule 13.3 bestromt wird in grundsätzlich bekannter Weise ein Anker des Magnetventils 12 angezogen und so das Magnetventil 12 in die Belüftungsstellung geschaltet. Der Anker wird dann von dem ersten Permanentmagneten 13.1 in der Belüftungsstellung gehalten, die demnach eine magnetische Raststellung ist. Der erste Permanentmagnet 13.1 und die erste Spule 13.3 sind der Belüftungsstellung zugeordnet. Wird hingegen die zweite Spule 13.4 bestromt, wird der Anker in die entgegengesetzte Raststellung gezogen und das Magnetventil 12 in die Entlüftungsstellung geschaltet. In dieser Raststellung wird der Anker durch den zweiten Permanentmagneten 13.2 gehalten. Es könnte grundsätzlich aber auch nur eine Spule 13.3, 13.4 vorgesehen sein, die dann zum Schalten des Magnetventils 12 in die Belüftungsstellung und Entlüftungsstellung umzupolen ist. Auch ist es denkbar, dass nur ein Permanentmagnet 13.1, 13.2 vorgesehen ist, der dann vorzugsweise an dem Anker des Magnetventils 12 angeordnet ist.

In dem in Fig. 1 gezeigten Ausführungsbeispiel ist das Feststellbremsmodul 2 mit einer eigenen elektronischen Steuereinheit ECU ausgestattet, auch wenn dies nicht zwingend ist, und empfängt das Feststellbremssignal SFB und steuert dann in der Folge wenigstens ein erstes Schaltsignal S1 an dem Magnetventil 12 aus, um dieses zwischen der ersten und der zweiten Schaltstellung selektiv zu schalten. Für den Fall, dass das Feststellbremsmodul 2 über keine eigene elektronische Steuereinheit ECU verfügt, kann das erste Schaltsignal S1 auch von einer externen Steuereinheit direkt bereitgestellt werden. Das Magnetventil 12 lässt sich durch einen Impuls jeweils in die erste oder zweite Schaltstellung schalten. In dem gezeigten Ausführungsbeispiel hat das Magnetventil 12 zusätzlich zu herkömmlichen Magnetventilen eine Vorzugsstellung, und zwar ist das Magnetventil 12 in die zweite in Fig. 1 gezeigte Schaltstellung vorgespannt. Zu diesem Zweck ist eine Feder 18 vorgesehen, die das Magnetventil 12 in die zweite in Fig. 1 gezeigte Schaltstellung (Entlüftungsstellung) bringt.

Der von dem Magnetventil 12 ausgesteuerte Vorsteuerdruck pSV wird über das Halteventil 14 an der Hauptventileinheit 10 bereitgestellt. Die Hauptventileinheit 10 umfasst ein Relaisventil 20, welches einen Relaisventil-Vorratsanschluss 20.1, einen Relaisventil-Arbeitsanschluss 20.2, einen Relaisventil-Entlüftungsanschluss 20.3 und einen Relaisventil-Steueranschluss 20.4 aufweist. Der Relaisventil-Vorratsanschluss 20.1 ist mit dem Vorratsanschluss 4 verbunden und empfängt Vorratsdruck pV. Der Relaisventil-Arbeitsanschluss 20.2 ist mit einem Federspeicheranschluss 21 des Feststellbremsmoduls 2 verbunden, an welchem die Hauptventileinheit 10 einen Parkbremsdruck pBP aussteuert. Der Relaisventil-Entlüftungsanschluss 20.3 ist mit der Entlüftung 3 verbunden und der Relaisventil-Steueranschluss 20.4 ist mit der Vorsteuereinheit 8 verbunden und empfängt den Vorsteuerdruck pSV. An den Federspeicheranschluss 21 können einer oder mehrere Federspeicherbremszylinder 108a, 108b (vgl. Fig. 4) angeschlossen werden, die belüftet lösen und entlüftet mittels einer Federkraft zuspannen.

Zum Lösen der Federspeicherbremszylinder 108a, 108b muss also der Federspeicheranschluss 21 belüftet werden, sodass der Parkbremsdruck pBP ausgesteuert wird. Zu diesem Zweck wird das Magnetventil 12 von der in Fig. 1 gezeigten Entlüftungsstellung in die in Fig. 1 nicht gezeigte Belüftungsstellung verbracht, sodass der Vorsteuerdruck pSV ausgesteuert wird. Das Halteventil 14 ist in der offenen Schaltposition. Das Halteventil 14 weist einen ersten Halteventilanschluss 14.1 und einen zweiten Halteventilanschluss 14.2 auf, wobei der erste Halteventilanschluss 14.1 mit dem Magnetventil 12 verbunden ist, genauer gesagt mit dem zweiten Magnetventilanschluss 12.2, und den Vorsteuerdruck pSV empfängt. Der zweite Halteventilanschluss 14.2 ist mit der Hauptventileinheit 10, genauer gesagt mit dem Relaisventil-Steueranschluss 20.4 verbunden. Das Halteventil 14 ist elektromagnetisch und monostabil ausgebildet und kann von der stabilen ersten in Fig. 1 gezeigten Schaltstellung, die eine Öffnungsstellung ist, in eine zweite geschlossene, nicht stabile Schaltstellung durch Bereitstellen eines zweiten Schaltsignals S2 gebracht werden, indem ein Elektromagnet in dem Halteventil 14 bestromt wird. Wird also zunächst das Magnetventil 12 so geschaltet, dass der Vorsteuerdruck pSV ausgesteuert wird und das Halteventil 14 offen ist, wird der Vorsteuerdruck pSV weitergeleitet und an dem Relaisventil-Steueranschluss 20.4 ausgesteuert, welches dann in Folge diesen Druck volumenverstärkt und den Parkbremsdruck pBP an dem Federspeicheranschluss 21 aussteuert. Nun kann das Halteventil 14 in die geschlossene zweite Schaltstellung verbracht werden, sodass der Vorsteuerdruck pSV zwischen dem zweiten Halteventilanschluss 14.2 und dem Relaisventil-Steueranschluss 20.4 eingesperrt ist. Das Magnetventil 12 kann nun wieder in die erste in Fig. 1 gezeigte Entlüftungsstellung gebracht werden. Die Federspeicherbremszylinder 108a, 108b bleiben dennoch weiterhin belüftet und damit gelöst. Auch wenn hier nur eine Variante mit Vorsteuereinheit 8 und Hauptventileinheit 10 beschrieben ist soll verstanden werden, dass die Hauptventileinheit 10 nicht zwingend erforderlich ist und der Vorsteuerdruck pSV ebenso direkt als Parkbremsdruck pBP ausgesteuert werden könnte. In diesem Fall wäre der zweite Halteventilanschluss 14.2 mit dem Federspeicheranschluss 21 verbunden ohne Zwischenschaltung der Hauptventileinheit 10.

Als anderer Regelmechanismus kann aber auch das Halteventil 14 offen bleiben in seiner stabilen Schaltposition. Um nun das Magnetventil 12 in der ersten in Fig. 1 nicht gezeigten Belüftungsstellung zu halten, weist das Magnetventil 12 einen Sicherheitssteueranschluss 12.4 auf. Der Sicherheitssteueranschluss 12.4 ist über eine Sicherheitsleitung 22 mit einer ersten Steuerleitung 24 verbunden, die den zweiten Magnetventilanschluss 12.2 und den ersten Halteventilanschluss 14.1 verbindet. Die Sicherheitsleitung 22 führt also den vom Magnetventil 12 ausgesteuerten Druck zurück an den Sicherheitssteueranschluss 12.4. Wird der Vorsteuerdruck pSV durch das Magnetventil 12 ausgesteuert, wird dieser über die Sicherheitsleitung 22 an den Sicherheitssteueranschluss 12.4 bereitgestellt, sodass dieser als Sicherheitssteuerdruck pSS an dem Magnetventil 12 anliegt. Der Sicherheitssteueranschluss 12.4 ist so angeordnet, dass der Sicherheitssteuerdruck pSS so auf das Magnetventil 12 wirkt, dass dieses in die erste in Fig. 1 nicht gezeigte Schaltstellung, also die Belüftungsstellung, belastet wird. Insbesondere sind interne Steuerflächen so gewählt, dass der Sicherheitssteuerdruck pSS in etwa eine mit der Feder 18 übereinstimmende Kraftwirkung ausübt, sodass durch Anlegen des Sicherheitssteuerdrucks pSS die Vorzugsstellung des Magnetventils 12 aufgehoben bzw. neutralisiert werden kann. In diesem Zustand kann das Magnetventil 12 auch durch entsprechende Bestromung der ersten und zweiten Spulen 13.3, 13.4 in die Be- oder Entlüftungsstellung geschaltet werden, da sich die Feder 18 und der Sicherheitssteuerdruck pSS gegenseitig im Wesentlichen neutralisieren. In den jeweiligen Schaltstellungen wirkt dann die Magnetkraft entweder des ersten oder zweiten Permanentmagneten 13.1, 13.2 sodass die Schaltstellungen Raststellungen sind, und der Anker kann nur durch Aufbringen einer gewissen Mindestkraft aus den jeweiligen Raststellungen gebracht werden durch Überwinden der Magnetkräfte.

Sinkt allerdings der Sicherheitssteuerdruck pSS unter einen ersten Schwellwert, der etwa in einem Bereich von 200 kPa bis 400 kPa liegen kann, ist die Kraftwirkung durch den Sicherheitssteuerdruck pSS geringer als die der Federkraft durch die Feder 18, sodass das Magnetventil 12 wieder eine Vorzugsstellung hat und in die zweite in Fig. 1 gezeigte Entlüftungsstellung zurückfällt. Kommt es also in einem Fehlerfall des Nutzfahrzeugs 100 dazu, dass der Vorratsdruck pV absinkt, weil sowohl der erste als auch der zweite Druckluftvorrat 6, 7 entleert werden, ein Leck haben oder aktiv durch den Fahrer heruntergepumpt werden, sinkt auch der Vorsteuerdruck pSV ab, wenn das Magnetventil 12 in der in Fig. 1 nicht gezeigten Belüftungsstellung ist. Wenn aber der Vorsteuerdruck pSV absinkt, sinkt gleichzeitig auch der Sicherheitssteuerdruck pSS ab, sodass ab einem gewissen Punkt, nämlich vorzugsweise bei Unterschreiten des ersten Schwellwerts, die Vorzugsstellung des Magnetventils 12 wieder greift und die Feder 18 das Magnetventil 12 in die in Fig. 1 gezeigte Entlüftungsstellung verbringt, sodass infolgedessen der Relaisventil-Steueranschluss 20.4 entlüftet wird und kein Parkbremsdruck pBP mehr ausgesteuert wird. Die Federspeicherbremszylinder 108a, 108b werden vollständig entlüftet.

Sollte in diesem Zustand nun der erste und/oder zweite Druckluftvorrat 6, 7 wieder aufgefüllt werden, beispielsweise, weil das Nutzfahrzeug 100 wieder Energie hat oder die ersten und zweiten Druckluftvorräte 6, 7 durch einen Servicetechniker aufgefüllt werden, ist das Magnetventil 12 dennoch in der zweiten in Fig. 1 gezeigten Entlüftungsstellung und der Federspeicheranschluss 21 wird nicht automatisch und ungewollt belüftet. Erst durch Bereitstellen des Feststellbremssignals SFB bzw. ersten Schaltsignals S1 und Bestromen der ersten Spule 13.3 kann das Magnetventil 12 wieder in die in Fig. 1 nicht gezeigte Belüftungsstellung zum Belüften gebracht werden, sodass die Federspeicherbremszylinder 108a, 108b wieder gelöst werden können. Ein ungewolltes Lösen der Federspeicherbremszylinder 108a, 108b ist wirksam verhindert.

Das Feststellbremsmodul 2 weist in dem hier gezeigten Ausführungsbeispiel (Fig. 1) ferner einen ersten Drucksensor 26 sowie einen zweiten Drucksensor 28 auf. Der erste Drucksensor 26 ist über eine erste Druckmessleitung 27 mit dem Vorratsanschluss 4 verbunden und misst so den Vorratsdruck pV und stellt ein entsprechendes erstes Drucksignal SD1 an der elektronischen Steuereinheit ECU bereit. Der zweite Drucksensor 28 ist über eine zweite Druckmessleitung 29 mit dem Federspeicheranschluss 21 verbunden und ermittelt so den Parkbremsdruck pBP und stellt ein entsprechendes zweites Drucksignal SD2 an der elektronischen Steuereinheit ECU bereit. Über die ersten und zweiten Drucksignale SD1, SD2 kann die Aussteuerung der Drücke sowie die Schaltstellung der einzelnen Ventile verifiziert und plausibilisiert werden.

Ferner weist die elektropneumatische Ventilanordnung 1 gemäß dem hier gezeigten Ausführungsbeispiel einen Lösesteueranschluss 30 auf. Ein solcher Lösesteueranschluss 30 wird auch als Anti-Compound-Anschluss bezeichnet, über den ein Lösesteuerdruck pL eingesteuert werden kann. Der Lösesteueranschluss 30 ist mit einem Lösesteuerpfad 32 verbunden. Der über den Lösesteueranschluss 30 eingesteuerte Lösesteuerdruck pL bewirkt die Aussteuerung des Parkbremsdrucks pBP am wenigstens einen Federspeicheranschluss 21. Der Lösesteuerpfad 32 umfasst eine Löseleitung 33, die sich von dem Lösesteueranschluss 30 erstreckt. Als Lösesteuerdruck pL wird typischerweise der Druck einer weiteren Achse, beispielsweise der Vorder- oder Hinterachse, insbesondere der Betriebsbremsdruck, verwendet. Für den Fall, dass die an dem Federspeicheranschluss 21 angeschlossenen Federspeicherbremszylinder 108a, 108b auch zum Zusatzbremsen oder Notbremsen verwendet werden, soll hierdurch eine zu starke Betätigung der Federspeicherbremszylinder 108a, 108b verhindert werden, die zum Blockieren des Fahrzeugs 100 führen könnte. Werden also Betriebsbremsen an der Hinterachse aktiviert, sollen möglichst nicht gleichzeitig auch die Federspeicherbremszylinder 108a, 108b eingelegt werden, sodass es sich anbietet, den Betriebsbremsdruck der Hinterachse als Lösesteuerdruck pL dem Lösesteueranschluss 30 bereitzustellen, um die Federspeicherbremszylinder 108a, 108b reziprok zu Einlegen der Betriebsbremsen zu lösen.

In dem in Fig. 1 gezeigten Ausführungsbeispiel ist die Lösesteuerleitung 33 mit einem Wechselventil 34 verbunden. Der Lösesteuerdruck pL kann über den Lösesteuerpfad 32 dem Relaisventil-Steueranschluss 20.4 zugeführt werden. Das Wechselventil 34 hat einen ersten Wechselventilanschluss 34.1, einen zweiten Wechselventilanschluss 34.2 und einen dritten Wechselventilanschluss 34.3. Das Wechselventil 34 ist so ausgebildet, dass es jeweils den höheren des am ersten und zweiten Wechselventilanschluss 34.1, 34.2 anliegenden Druck an den dritten Wechselventilanschluss 34.3 weiterleitet. Der erste Wechselventilanschluss 34.1 ist hier über eine zweite Steuerleitung 36 mit dem zweiten Halteventilanschluss 14.2 verbunden, kann aber auch unmittelbar mit dem zweiten Halteventilanschluss 14.2 oder auch mit dem Magnetventil 12 verbunden sein. Jedenfalls ist der erste Wechselventilanschluss 34.1 mit der Vorsteuereinheit 8 verbunden und empfängt den Vorsteuerdruck pSV. Der zweite Wechselventilanschluss 34.2 ist mit dem Lösesteueranschluss 30 verbunden und empfängt den Lösesteuerdruck pL. Der dritte Wechselventilanschluss 34.3 ist mit dem Relaisventil-Steueranschluss 20.4 verbunden, sodass jeweils der höhere des Vorsteuerdrucks pSV oder des Lösesteuerdrucks pL an den Relaisventil-Steueranschluss 20.4 ausgesteuert wird, um so die Aussteuerung des Parkbremsdrucks pBP zu bewirken.

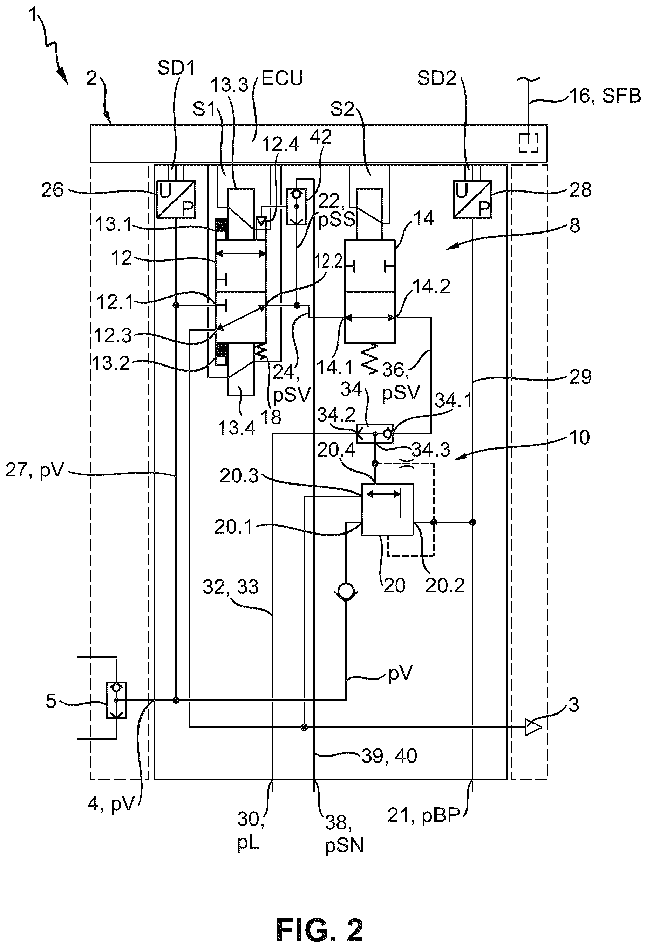

Das in Fig. 2 gezeigte zweite Ausführungsbeispiel basiert grundsätzlich auf dem ersten Ausführungsbeispiel (Fig. 1), sodass gleiche und ähnliche Elemente mit gleichen Bezugszeichen versehen sind. Insofern wird vollumfänglich auf die obige Beschreibung zum ersten Ausführungsbeispiel (Fig. 1) verwiesen. Im Folgenden werden insbesondere die Unterschiede zum ersten Ausführungsbeispiel hervorgehoben.

Der wesentliche Unterschied im zweiten Ausführungsbeispiel (Fig. 2) ist der, dass ein Notlöseanschluss 38 vorgesehen ist, über den ein Notlösedruck pSN zugeführt werden kann. Der Notlöseanschluss 38 ist in diesem Ausführungsbeispiel über einen Notlösepfad 39 mit dem Magnetventil 12 verbunden, genauer gesagt, mit dem Sicherheitssteueranschluss 12.4 und kann den Notlösedruck pSN an dem Sicherheitssteueranschluss 12.4 bereitstellen. Zu diesem Zweck ist zwischen die Sicherheitsleitung 22 und den Sicherheitssteueranschluss 12.4 ein Notlöse-Wechselventil 42 geschaltet, welches über eine Notlöseleitung 40 mit dem Notlöseanschluss 38 verbunden ist. Das Notlöse-Wechselventil 42 ist ebenso wie das erste Wechselventil 34 ausgebildet, sodass jeweils der höhere des Sicherheitssteuerdrucks pSS oder Notlösedrucks pSN an dem Sicherheitssteueranschluss 12.4 ausgesteuert wird. Auf diese Weise kann das Magnetventil 12 von der ersten in Fig. 2 gezeigten Schaltstellung in die zweite in Fig. 2 nicht gezeigte Belüftungsstellung verbracht werden, insbesondere, wenn der Notlösedruck pSN einen zweiten Schwellwert übersteigt, der vorzugsweise in einem Bereich von 400 kPa bis 800 kPa liegt und die von der Feder 18 aufgebrachte Kraft sowie gegebenenfalls eine Rastkraft für den Anker des Magnetventils, die dieses in der Entlüftungsstellung hält, übersteigt, sodass das Magnetventil 12 umschalten kann. Auf diese Weise kann dann der Vorsteuereinheit 8 der Vorratsdruck pV bereitgestellt werden, um so den Vorsteuerdruck pSV auszusteuern und infolgedessen den Federspeicheranschluss 21 zu belüften. Der Notlösedruck pSN wird insbesondere dazu verwendet, das Magnetventil 12 für den Fall zu schalten, wenn das Schaltsignal S1 nicht bereitgestellt werden kann. Beispielsweise kann der Notlösedruck pSN ein manuell ausgesteuerter Druck sein, der über einen extern angeschlossenen Behälter zugeführt wird, wie beispielsweise ein Reifendruck. Es kann aber auch der Druck eines weiteren, hier nicht gezeigten Druckluftvorrats, eines weiteren Moduls, einer weiteren Achse oder dergleichen genutzt werden. Der Notlösedruck pSN dient insbesondere dazu, den Federspeicheranschluss 21 zu belüften, für den Fall, dass sich das Magnetventil 12 nicht mehr elektronisch in die Belüftungsstellung schalten lässt. Beispielsweise könnte das Magnetventil 12 auf diese Weise durch den Betriebsbremsdruck einer weiteren Achse rückgestellt werden.

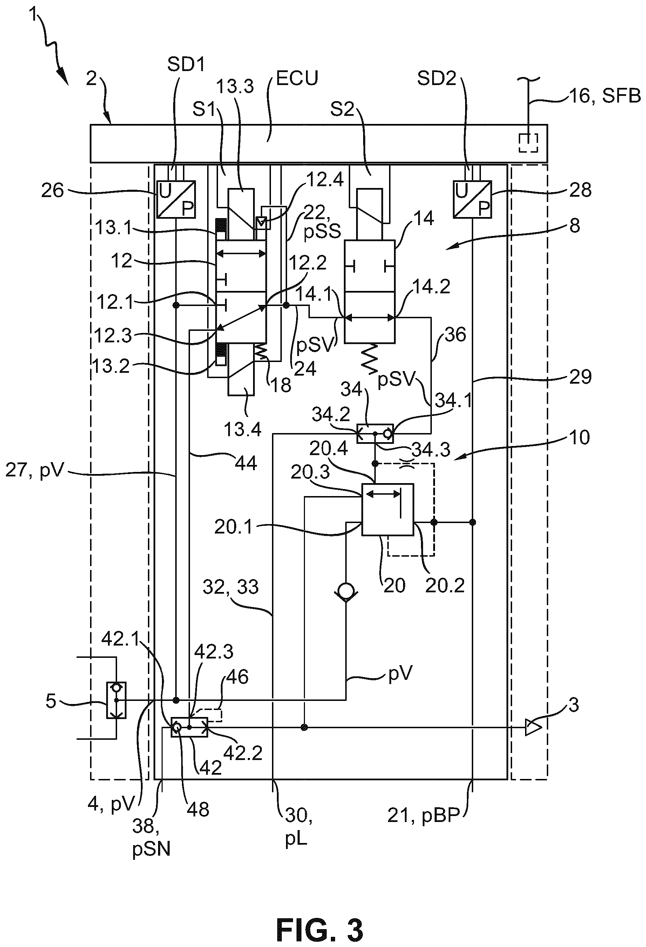

Eine Variante hierzu ist in Fig. 3 gezeigt. Fig. 3 basiert wiederum auf den Fig. 1 und 2, und gleiche und ähnliche Elemente sind mit gleichen Bezugszeichen versehen, sodass vollumfänglich auf die obige Beschreibung zu den ersten und zweiten Ausführungsbeispielen (Fig. 1, Fig. 2) verweisen wird. Im Nachfolgenden werden insbesondere die Unterschiede zu dem ersten und zweiten Ausführungsbeispiel hervorgehoben.

Im Unterschied zum ersten Ausführungsbeispiel (Fig. 1) weist die elektropneumatische Ventilanordnung 1 gemäß dem dritten Ausführungsbeispiel (Fig. 3) wiederum den Notlöseanschluss 38 auf. Dieser ist im Unterschied zum zweiten Ausführungsbeispiel (Fig. 2) allerdings nicht mit dem Sicherheitssteueranschluss 12.4 des Magnetventils 12 verbunden, sondern mündet vielmehr in einen Entlüftungspfad 44 der Vorsteuereinheit 8, genauer gesagt des Magnetventils 12. In diesem Sinne ist der Notlöseanschluss 38 also wiederum mit dem Magnetventil 12 verbunden, allerdings mit dem dritten Magnetventilanschluss 12.3. Über den Notlöseanschluss 38 lässt sich also der Notlösedruck pSN über den Entlüftungspfad 44 an dem dritten Magnetventilanschluss 12.4 aussteuern, sodass dieser dann, wenn das Magnetventil 12 in der Entlüftungsstellung ist, wiederum die Aussteuerung des Vorsteuerdruck pSV veranlasst. Das Halteventil 14 ist in diesem Fall stromlos in der offenen in Fig. 3 gezeigten Schaltstellung, sodass der Vorsteuerdruck pSV mittels des Notlösedrucks pSN an der Hauptventileinheit 10 ausgesteuert werden kann, sodass die Hauptventileinheit 10 in der Folge den Parkbremsdruck pBP aussteuern kann. Das dritte Ausführungsbeispiel (Fig. 3) basiert also nicht wie das zweite Ausführungsbeispiel (Fig. 2) auf einem manuellen bzw. pneumatischen zusätzlichen Schalten des Magnetventils 12 in die Belüftungsstellung, sondern nutzt den Entlüftungspfad 44 des Magnetventils 12, um über diesen den Notlösedruck einzusteuern, und auf diese Weise ein Lösen der Federspeicherbremszylinder 108a, 108b zu bewirken.

Um das Einsteuern des Notlösedrucks pSN in den Entlüftungspfad 44, der auch mit der Entlüftung 3 verbunden sein muss, zu ermöglichen, dient wie im zweiten Ausführungsbeispiel (Fig. 2) auch in diesem Fall das Notlöse-Wechselventil 42. Dieses ist so angeordnet, dass es einerseits eine Verbindung zwischen der Vorsteuereinheit 8 und der Entlüftung 3, andererseits aber auch die Einsteuerung des Notlösedrucks pSN über den Entlüftungspfad 44 an die Vorsteuereinheit 8 erlaubt. Zu diesem Zweck weist das Notlöse-Wechselventil einen ersten Notlöse-Wechselventilanschluss 42.1 auf, der mit dem Notlöseanschluss 38 verbunden ist. Es weist einen zweiten Notlöse-Wechselventilanschluss 42.2 auf, der mit der Entlüftung 3 verbunden ist, sowie einen dritten Notlöse-Wechselventilanschluss 42.3, der dann seinerseits mit dem dritten Magnetventilanschluss 12.3 verbunden ist. Das Notlöse-Wechselventil 42 weist ferner eine Vorzugsstellung auf und ist so vorzugsweise als Einfach-Rückschlagventil ausgebildet. Zur Realisierung der Vorzugsstellung ist eine Rückführleitung 46 vorgesehen, die dazu führt, dass pneumatisch ein Ventilelement 48 den ersten Notlöse-Wechselventilanschluss 42.1 verschließt. Im Grundzustand und wenn die Vorsteuereinheit 8 über den Entlüftungspfad 44 entlüftet wird, wird auf diese Weise das Ventilelement 48 vorgespannt und der zweite und dritte Notlöse-Wechselventilanschluss 42.2, 42.3 stehen in Verbindung. Erst wenn gegen den drucklosen Entlüftungspfad 44 der Notlösedruck pSN eingesteuert wird, wird das Ventilelement 48 aus der in Fig. 3 gezeigten Stellung gehoben und gibt den ersten Notlöse-Wechselventilanschluss 42.1 frei. Neben der pneumatischen Realisierung über die Rückführung 46 kann dies auch mechanisch mittels einer Feder gelöst werden. Bevorzugt ist lediglich, dass der zweite und dritte Notlöse-Wechselventilanschluss 42.2, 42.3 drucklos sowie im Entlüftungsbetrieb permanent und ungehindert miteinander verbunden sind.

Fig. 4 schließlich illustriert ein Fahrzeug 100, nämlich ein Nutzfahrzeug, mit einem Bremssystem 102, welches hier als elektronisch steuerbares pneumatisches Bremssystem ausgebildet ist. Das Fahrzeug 100 weist eine Vorderachse VA sowie eine Hinterachse HA auf. Ein Zentralmodul 104, welches auch als Hinterachsmodulator ausgebildet ist, bremst die Hinterachse HA, und ein Vorderachsmodulator 106 ist der Vorderachse VA zugeordnet. Das Zentralmodul 104 und der Vorderachsmodulator 106 sind über eine elektronische Leitung 107 miteinander verbunden und tauschen so Signale, wie insbesondere Bremssignale aus. An der Hinterachse HA sind neben ersten und zweiten Federspeicherbremszylindern 108a, 108b auch erste und zweite Betriebsbremszylinder 109a, 109b vorgesehen, die gemeinsam mit den Federspeicherbremszylindern 108a, 108b in sogenannten Tristop-Zylindern untergebracht sein können. An der Vorderachse VA steuert der Vorderachsmodulator 106 entsprechende Bremsdrücke an Vorderachsbetriebsbremszylindern 110a, 110b. Die Federspeicherbremszylinder 108a, 108b werden über ein Feststellbremsmodul 2 gesteuert, in welchem die elektropneumatische Ventilanordnung 1 gemäß der Erfindung umgesetzt ist. Das Feststellbremsmodul 2 weist den Federspeicheranschluss 21 auf, der wie in Fig. 4 gezeigt mit den Federspeicherbremszylindern 108a, 108b verbunden ist. Der Fahrzeug-BUS 16 verbindet das Feststellbremsmodul 2 mit der Zentraleinheit 104.

### Bezugszeichenliste (Teil der Beschreibung)

- 1: Elektropneumatische Ventilanordnung
- 2: Feststellbremsmodul
- 3: Entlüftung
- 4: Vorratsanschluss
- 5: Vorrats-Wechselventil
- 6: Erster Druckluftvorrat
- 7: Zweiter Druckluftvorrat
- 8: Vorsteuereinheit
- 10: Hauptventileinheit
- 12: Elektromagnetisches Magnetventil
- 12.1: Erster Magnetventilanschluss
- 12.2: Zweiter Magnetventilanschluss
- 12.3: Dritter Magnetventilanschluss
- 12.4: Sicherheitssteueranschluss
- 13.1: Erster Permanentmagnet
- 13.2: Zweiter Permanentmagnet
- 13.3: Erste Spule
- 13.4: Zweite Spule
- 14: Halteventil
- 14.1: Erster Halteventilanschluss
- 14.2: Zweiter Halteventilanschluss
- 16: Fahrzeug-BUS
- 18: Feder
- 20: Relaisventil
- 20.1: Relaisventil-Vorratsanschluss
- 20.2: Relaisventil-Arbeitsanschluss
- 20.3: Relaisventil-Entlüftungsanschluss
- 20.4: Relaisventil-Steueranschluss
- 21: Federspeicheranschluss
- 22: Sicherheitsleitung
- 24: Erste Steuerleitung
- 26: Erster Drucksensor
- 27: Erste Druckmessleitung
- 28: zweiter Drucksensor
- 29: Zweite Druckmessleitung
- 30: Lösesteueranschluss
- 32: Lösesteuerpfad
- 33: Löseleitung
- 34: Wechselventil
- 34.1: Erster Wechselventilanschluss
- 34.2: Zweiter Wechselventilanschluss
- 34.3: Dritter Wechselventilanschluss
- 36: Zweite Steuerleitung
- 38: Notlöseanschluss
- 39: Notlösepfad
- 40: Notlöseleitung
- 42: Notlöse-Wechselventil
- 42.1: Erster Notlöse-Wechselventilanschluss
- 42.2: Zweiter Notlöse-Wechselventilanschluss
- 42.3: Dritter Notlöse-Wechselventilanschluss
- 44: Entlüftungspfad
- 46: Rückführung
- 48: Ventilelement
- 100: Nutzfahrzeug
- 102: Bremssystem
- 104: Zentralmodul
- 106: Vorderachsmodulator
- 108a, 108b: Federspeicherbremszylinder
- 109a, 109b: Betriebsbremszylinder an der Hinterachse
- 110a, 110b: Betriebsbremszylinder an der Vorderachse
- ECU: Elektronische Steuereinheit
- pBP: Parkbremsdruck
- pL: Lösesteuerdruck
- pSN: Notlösedruck
- pSS: Sicherheitssteuerdruck
- pSV: Vorsteuerdruck
- pV: Vorratsdruck
- S1: Erstes Schaltsignal
- S2: Zweites Schaltsignal
- SFB: Feststellbremssignal
- SD1: Erstes Drucksignal
- SD2: Zweites Drucksignal
- VA: Vorderachse
- HA: Hinterachse

## Patentansprüche

1. Elektropneumatische Ventilanordnung (1) zur Betätigung einer Feststellbremsfunktion eines elektropneumatischen Bremssystems (102) eines Nutzfahrzeugs (100), mit
einer Vorsteuereinheit (8) mit einem elektromagnetischen Magnetventil (12) mit wenigsten einem ersten Permanentmagnet (13.1), wobei die Vorsteuereinheit (8) in Abhängigkeit von einem elektronischen Feststellbremssignal (SFB) einen Vorsteuerdruck (pSV) aussteuert; und
einer Hauptventileinheit (10), die den Vorsteuerdruck (pSV) empfängt und in Abhängigkeit vom Vorsteuerdruck (pSV) einen Parkbremsdruck (pBP) an wenigsten einem Federspeicheranschluss (21) aussteuert;
**dadurch gekennzeichnet, dass** das Magnetventil (12) einen Sicherheitssteueranschluss (12.4) zum Empfangen eines Sicherheitssteuerdrucks (pSS) aufweist,
wobei das Magnetventil (12) in Abhängigkeit vom Sicherheitssteuerdruck (pSS) die Vorsteuereinheit (8) mit Vorratsdruck (pV) versorgt oder diese mit einer Entlüftung (3) verbindet, wobei der Sicherheitssteuerdruck (pSS) ein von dem Magnetventil (12) ausgesteuerter Druck oder ein davon abgeleiteter Druck ist.

2. Elektropneumatische Ventilanordnung nach Anspruch 1,
wobei das Magnetventil (12) einen den Vorratsdruck (pV) empfangenden ersten Magnetventilanschluss (12.1), einen den Vorsteuerdruck (pSV) aussteuernden zweiten Magnetventilanschluss (12.2) und einen mit einer Entlüftung (3) verbundenen dritten Magnetventilanschluss (12.3) aufweist, wobei in einer Belüftungsstellung des Magnetventils (12) der erste Magnetventilanschluss (12.1) mit dem zweiten Magnetventilanschluss (12.2) verbunden ist, und in einer Entlüftungsstellung des Magnetventils (12) der dritte Magnetventilanschluss (12.3) mit dem zweiten Magnetventilanschluss (12.2) verbunden ist, wobei durch Bestromen von wenigstens einer Spule (13.3, 13.4) das Magnetventil (12) wahlweise in die Belüftungsstellung oder die Entlüftungsstellung geschaltet werden kann, wobei das Magnetventil (12) mittels des wenigstens einen Permanentmagneten (13.1) magnetisch in der jeweiligen Schaltstellung gehalten werden kann, und
wobei für den Fall, dass der Sicherheitssteuerdruck (pSS) einen ersten Schwellwert unterschreitet, das Magnetventil (12) unabhängig von einer vorherigen Schaltstellung in die Entlüftungsstellung geschaltet wird.

3. Elektropneumatische Ventilanordnung nach Anspruch 2, wobei für den Fall, dass der Sicherheitssteuerdruck (pSS) den ersten Schwellwert überschreitet, das Magnetventil (12) in der vorherigen Schaltstellung gehalten wird, und vorzugsweise durch Bestromen wenigstens einer Spule (13.3, 13.4) wahlweise in die Belüftungsstellung oder die Entlüftungsstellung geschaltet werden kann.

4. Elektropneumatische Ventilanordnung nach Anspruch 2 oder 3, wobei für den Fall, dass der Sicherheitssteuerdruck (pSS) einen zweiten Schwellwert überschreitet, der höher als der erste Schwellwert ist, das Magnetventil (12) in die Belüftungsstellung geschaltet wird und vorzugsweise durch Bestromen wenigstens einer Spule (13.3, 13.4) in die Entlüftungsstellung geschaltet werden kann.

5. Elektropneumatische Ventilanordnung nach Anspruch 2 oder 3, wobei der erste Schwellwert in einem Bereich von 200 kPa bis 400 kPa, vorzugsweise 250 kPa bis 350 kPa liegt.

6. Elektropneumatische Ventilanordnung nach Anspruch 4, wobei der zweite Schwellwert in einem Bereich von 500 kPa bis 900 kPa, vorzugsweise 600 kPa bis 800 kPa liegt.

7. Elektropneumatische Ventilanordnung nach einem der vorstehenden Ansprüche, wobei das Magnetventil (12) eine Vorzugsstellung aufweist.

8. Elektropneumatische Ventilanordnung nach Anspruch 7, wobei in der Vorzugsstellung die Vorsteuereinheit (8) mit der Entlüftung (3) verbunden ist.

9. Elektropneumatische Ventilanordnung nach einem der vorstehenden Ansprüche, aufweisend einen Notlöseanschluss (38) mit einem Notlösepfad (39) zum Einsteuern eines Notlösedrucks (pSN), der die Aussteuerung des Parkbremsdrucks (pBP) am wenigstens einen Federspeicheranschluss (21) bewirkt.

10. Elektropneumatische Ventilanordnung nach Anspruch 9, wobei das Magnetventil (12) in Abhängigkeit vom Notlösedruck (pSN) die Vorsteuereinheit (8) mit Vorratsdruck (pV) versorgt oder diese mit einer Entlüftung (3) verbindet.

11. Elektropneumatische Ventilanordnung nach Anspruch 9 oder 10, wobei der Notlösepfad (39) in einen Entlüftungspfad (44) des Magnetventils (12) mündet.

12. Elektropneumatische Ventilanordnung nach Anspruch 9 oder 10 und Anspruch 2, wobei der Notlösedruck (pSN) über den Notlösepfad (39) an dem Sicherheitssteueranschluss (12.4) des Magnetventils (12) oder einem weiteren Steueranschluss des Magnetventils (12) ausgesteuert wird.

13. Elektropneumatische Ventilanordnung nach Anspruch 12, wobei für den Fall, dass der Notlösedruck (pSN) einen oder den zweiten Schwellwert überschreitet, das Magnetventil (12) in die Belüftungsstellung geschaltet wird.

14. Verfahren zum Steuern einer Parkbremsfunktion eines Nutzfahrzeugs (100) mit einem elektropneumatischen Bremssystem (102) und vorzugsweise einer elektropneumatischen Ventilanordnung (1) nach einem der vorstehenden Ansprüche, mit den Schritten:
- elektromagnetisches Schalten eines elektromagnetischen Magnetventils (12) mit wenigstens einem ersten Permanentmagneten (13.1) von einer Entlüftungsstellung in eine Belüftungsstellung zum Aussteuern eines Parkbremsdrucks (pB) an wenigsten einem Federspeicheranschluss (21) zum Belüften von wenigsten einem Federspeicherbremszylinder (108a, 108b);
- Einsperren eines vom Magnetventil (12) ausgesteuerten Vorsteuerdrucks (pSV) und/oder Halten des Magnetventils (12) in der Belüftungsstellung; und
- Bei Absinken eines dem Magnetventil (12) bereitgestellten Vorratsdrucks (pV) unter einen ersten Schwellwert: pneumatisches oder mechanisches Schalten des Magnetventils (12) in die Entlüftungsstellung.

15. Verfahren nach Anspruch 14, wobei das Magnetventil (12) eine Vorzugsstellung aufweist, die durch Aussteuern eines Sicherheitssteuerdrucks (pSS) an einem Sicherheitssteueranschluss (12.4) des Magnetventils (12) aufgehoben werden kann.

16. Verfahren nach Anspruch 14 oder 15, aufweisend den Schritt:
- Aussteuern eines Sicherheitssteuerdrucks (pSS) an einem Sicherheitssteueranschluss (12.4) des Magnetventils (12) zum Halten des Magnetventils (12) in der Entlüftungsstellung oder zum Schalten des Magnetventils (12) in die Entlüftungsstellung, wobei der Sicherheitssteuerdruck (pSS) ein von dem Magnetventil (12) ausgesteuerter oder davon abgeleiteter Druck ist.

17. Verfahren nach einem der Anspruche 14 bis 16, aufweisend die Schritte:
- Aussteuern eines Notlösedrucks (pSN) zum Aussteuern des Parkbremsdrucks (pB) an dem wenigstens einen Federspeicheranschluss (21).

18. Verfahren nach Anspruch 17, wobei der Notlösedruck (pSN) in einen Entlüftungspfad (44) des Magnetventils (12) eingesteuert wird.

19. Verfahren nach Anspruch 16 und 17, wobei der Notlösedruck (pSN) an dem Sicherheitssteueranschluss (12.4) des Magnetventil (12) oder einem weiteren Steueranschluss des Magnetventils (12) ausgesteuert wird.

20. Nutzfahrzeug (100) mit einem elektronisch steuerbaren pneumatischen Bremssystem (102), welches eine elektropneumatische Ventilanordnung (1) nach einem der Ansprüche 1 bis 13 aufweist.

## Claims

1. Electropneumatic valve assembly (1) for actuating a parking brake function of an electropneumatic brake system (102) of a commercial vehicle (100), comprising
a pilot control unit (8) having an electromagnetic solenoid valve (12) which has at least one first permanent magnet (13.1), the pilot control unit (8) modulating a pilot control pressure (pSV) depending on an electronic parking brake signal (SFB); and
a main valve unit (10) which receives the pilot control pressure (pSV) and, depending on the pilot control pressure (pSV), modulates a parking brake pressure (pBP) at at least one spring-loaded connection (21);
**characterized in that** the solenoid valve (12) comprises a safety control connection (12.4) for receiving a safety control pressure (pSS),
the solenoid valve (12), depending on the safety control pressure (pSS), supplying the pilot control unit (8) with supply pressure (pV) or connecting said unit to a vent (3), the safety control pressure (pSS) being a pressure modulated by the solenoid valve (12) or a pressure derived therefrom.

2. Electropneumatic valve assembly according to claim 1,
wherein the solenoid valve (12) comprises a first solenoid valve connection (12.1) receiving the supply pressure (pV), a second solenoid valve connection (12.2) modulating the pilot control pressure (pSV), and a third solenoid valve connection (12.3) connected to a vent (3), wherein, in a ventilation position of the solenoid valve (12), the first solenoid valve connection (12.1) is connected to the second solenoid valve connection (12.2), and, in a venting position of the solenoid valve (12), the third solenoid valve connection (12.3) is connected to the second solenoid valve connection (12.2), wherein, by energizing at least one coil (13.3, 13.4), the solenoid valve (12) can be selectively switched to the ventilation position or the venting position, wherein the solenoid valve (12) can be magnetically held in the relevant switching position by means of the at least one permanent magnet (13.1), and
wherein, in the event that the safety control pressure (pSS) falls below a first threshold value, the solenoid valve (12) is switched to the venting position regardless of a previous switching position.

3. Electropneumatic valve assembly according to claim 2, wherein, in the event that the safety control pressure (pSS) exceeds the first threshold value, the solenoid valve (12) is held in the previous switching position, and can preferably be selectively switched to the ventilation position or the venting position by energizing at least one coil (13.3, 13.4).

4. Electropneumatic valve assembly according to claim 2 or claim 3, wherein, in the event that the safety control pressure (pSS) exceeds a second threshold value which is higher than the first threshold value, the solenoid valve (12) is switched to the ventilation position and can preferably be switched to the venting position by energizing at least one coil (13.3, 13.4).

5. Electropneumatic valve assembly according to claim 2 or claim 3, wherein the first threshold value is in a range from 200 kPa to 400 kPa, preferably 250 kPa to 350 kPa.

6. Electropneumatic valve assembly according to claim 4, wherein the second threshold value is in a range from 500 kPa to 900 kPa, preferably 600 kPa to 800 kPa.

7. Electropneumatic valve assembly according to any of the preceding claims, wherein the solenoid valve (12) has a preferred position.

8. Electropneumatic valve assembly according to claim 7, wherein in the preferred position, the pilot control unit (8) is connected to the vent (3).

9. Electropneumatic valve assembly according to any of the preceding claims, comprising an emergency release connection (38) having an emergency release path (39) for introducing an emergency release pressure (pSN) which effects modulation of the parking brake pressure (pBP) at at least one spring-loaded connection (21).

10. Electropneumatic valve assembly according to claim 9, wherein, depending on the emergency release pressure (pSN), the solenoid valve (12) supplies the pilot control unit (8) with supply pressure (pV) or connects said unit to a vent (3).

11. Electropneumatic valve assembly according to claim 9 or claim 10, wherein the emergency release path (39) opens into a vent path (44) of the solenoid valve (12).

12. Electropneumatic valve assembly according to claim 9 or claim 10 and claim 2, wherein the emergency release pressure (pSN) is modulated via the emergency release path (39) at the safety control connection (12.4) of the solenoid valve (12) or at a further control connection of the solenoid valve (12).

13. Electropneumatic valve assembly according to claim 12, wherein, in the event that the emergency release pressure (pSN) exceeds a or the second threshold value, the solenoid valve (12) is switched to the ventilation position.

14. Method for controlling a parking brake function of a commercial vehicle (100) comprising an electropneumatic brake system (102) and preferably an electropneumatic valve assembly (1) according to any of the preceding claims, the method comprising the steps of:
- electromagnetically switching an electromagnetic solenoid valve (12) having at least one first permanent magnet (13.1) from a venting position to a ventilation position in order to modulate a parking brake pressure (pB) at at least one spring-loaded connection (21) in order to ventilate at least one spring brake actuator (108a, 108b);
- locking in a pilot control pressure (pSV) modulated by the solenoid valve (12) and/or holding the solenoid valve (12) in the ventilation position; and
- pneumatically or mechanically switching the solenoid valve (12) to the venting position when a supply pressure (pV) supplied to the solenoid valve (12) falls below a first threshold value.

15. Method according to claim 14, wherein the solenoid valve (12) has a preferred position which can be revoked by modulating a safety control pressure (pSS) at a safety control connection (12.4) of the solenoid valve (12).

16. Method according to claim 14 or claim 15, comprising the step of:
- modulating a safety control pressure (pSS) at a safety control connection (12.4) of the solenoid valve (12) in order to hold the solenoid valve (12) in the venting position or switch the solenoid valve (12) to the venting position, wherein the safety control pressure (pSS) is a pressure modulated by the solenoid valve (12) or a pressure derived therefrom.

17. Method according to any of claims 14 to 16, comprising the steps of:
- modulating an emergency release pressure (pSN) in order to control the parking brake pressure (pB) at the at least one spring-loaded connection (21).

18. Method according to claim 17, wherein the emergency release pressure (pSN) is introduced into a vent path (44) of the solenoid valve (12).

19. Method according to claim 16 and claim 17, wherein the emergency release pressure (pSN) is modulated at the safety control connection (12.4) of the solenoid valve (12) or at a further control connection of the solenoid valve (12).

20. Commercial vehicle (100) comprising an electronically controllable pneumatic brake system (102) having an electropneumatic valve assembly (1) according to any of claims 1 to 13.

## Revendications

1. Agencement de soupapes électropneumatique (1) permettant d'actionner une fonction de frein de stationnement d'un système de freinage électropneumatique (102) d'un véhicule utilitaire (100), comportant
une unité de pilotage (8) comportant une électrovanne (12) électromagnétique comportant au moins un premier aimant permanent (13.1), dans lequel l'unité de pilotage (8) évacue une pression de pilotage (pSV) en fonction d'un signal de frein de stationnement (SFB) électronique ; et
une unité de soupape principale (10) qui reçoit la pression de pilotage (pSV) et qui, en fonction de la pression de pilotage (pSV), évacue une pression de frein de stationnement (pBP) sur au moins un raccord d'accumulateur à ressort (21) ;
**caractérisé en ce que** l'électrovanne (12) présente un raccord de commande de sécurité (12.4) permettant de recevoir une pression de commande de sécurité (pSS),
dans lequel l'électrovanne (12) alimente l'unité de pilotage (8) en pression de réserve (pV) ou relie celle-ci à une purge (3) en fonction de la pression de commande de sécurité (pSS), dans lequel la pression de commande de sécurité (pSS) est une pression évacuée par l'électrovanne (12) ou une pression dérivée de celle-ci.

2. Agencement de soupapes électropneumatique selon la revendication 1,
dans lequel l'électrovanne (12) présente un premier raccord d'électrovanne (12.1) recevant la pression de réserve (pV), un deuxième raccord d'électrovanne (12.2) évacuant la pression de pilotage (pSV) et un troisième raccord d'électrovanne (12.3) relié à une purge d'air (3), dans lequel le premier raccord d'électrovanne (12.1) est relié au deuxième raccord d'électrovanne (12.2) dans une position de ventilation de l'électrovanne (12), et dans une position de purge de l'électrovanne (12), le troisième raccord d'électrovanne (12.3) est relié au deuxième raccord d'électrovanne (12.2), dans lequel l'électrovanne (12) peut être commutée au choix dans la position de purge ou dans la position de ventilation par l'alimentation en courant d'au moins une bobine (13.3, 13.4), dans lequel l'électrovanne (12) peut être maintenue magnétiquement dans la position de commutation respective par le biais de l'au moins un aimant permanent (13.1), et
dans lequel, dans le cas où la pression de commande de sécurité (pSS) passe au-dessous d'une première valeur seuil, l'électrovanne (12) est commutée dans la position de purge indépendamment d'une position de commutation précédente.

3. Agencement de soupapes électropneumatique selon la revendication 2, dans lequel, dans le cas où la pression de commande de sécurité (pSS) passe au-dessus de la première valeur seuil, l'électrovanne (12) est maintenue dans la position de commutation précédente et peut être commutée au choix dans la position de ventilation ou dans la position de purge de préférence par alimentation en courant d'au moins une bobine (13.3, 13.4).

4. Agencement de soupapes électropneumatique selon la revendication 2 ou 3, dans lequel, dans le cas où la pression de commande de sécurité (pSS) passe au-dessus d'une seconde valeur seuil qui est supérieure à la première valeur seuil, l'électrovanne (12) est commutée dans la position de ventilation et peut être commutée dans la position de purge de préférence par alimentation en courant d'au moins une bobine (13.3, 13.4).

5. Agencement de soupapes électropneumatique selon la revendication 2 ou 3, dans lequel la première valeur seuil se situe dans une plage allant de 200 kPa à 400 kPa, de préférence de 250 kPa à 350 kPa.

6. Agencement de soupapes électropneumatique selon la revendication 4, dans lequel la seconde valeur seuil se situe dans une plage allant de 500 kPa à 900 kPa, de préférence de 600 kPa à 800 kPa.

7. Agencement de soupapes électropneumatique selon l'une des revendications précédentes, dans lequel l'électrovanne (12) présente une position préférentielle.

8. Agencement de soupapes électropneumatique selon la revendication 7, dans lequel, dans la position préférentielle, l'unité de pilotage (8) est reliée à la purge (3).

9. Agencement de soupapes électropneumatique selon l'une des revendications précédentes, présentant un raccord de relâchement d'urgence (38) comportant un chemin de relâchement d'urgence (39) pour la l'injection d'une pression de relâchement d'urgence (pSN) qui provoque l'évacuation de la pression de frein de stationnement (pBP) au niveau d'au moins un raccord d'accumulateur à ressort (21).

10. Agencement de soupapes électropneumatique selon la revendication 9, dans lequel l'électrovanne (12) alimente l'unité de pilotage (8) en pression de réserve (pV) ou relie celle-ci à une purge (3) en fonction de la pression de relâchement d'urgence (pSN).

11. Agencement de soupapes électropneumatique selon la revendication 9 ou 10, dans lequel le chemin de relâchement d'urgence (39) débouche dans un chemin de purge (44) de l'électrovanne (12).

12. Agencement de soupapes électropneumatique selon la revendication 9 ou 10 et la revendication 2, dans lequel la pression de relâchement d'urgence (pSN) est évacuée par l'intermédiaire du chemin de relâchement d'urgence (39) au niveau du raccord de commande de sécurité (12.4) de l'électrovanne (12) ou d'un autre raccord de commande de l'électrovanne (12).

13. Agencement de soupapes électropneumatique selon la revendication 12, dans lequel, dans le cas où la pression de relâchement d'urgence (pSN) passe au-dessus d'une ou de la seconde valeur seuil, l'électrovanne (12) est commutée dans la position de ventilation.

14. Procédé permettant de commander une fonction de frein de stationnement d'un véhicule utilitaire (100) comportant un système de freinage électropneumatique (102) et, de préférence, un agencement de soupapes électropneumatique (1) selon l'une des revendications précédentes, comportant les étapes consistant à :
- commuter électromagnétiquement une électrovanne (12) électromagnétique comportant au moins un premier aimant permanent (13.1) d'une position de purge à une position de ventilation pour l'évacuation d'une pression de frein de stationnement (pB) sur au moins un raccord d'accumulateur à ressort (21) pour la ventilation d'au moins un cylindre de frein d'accumulateur à ressort (108a, 108b) ;
- bloquer une pression de pilotage (pSV) évacuée par l'électrovanne (12) et/ou maintenir l'électrovanne (12) dans la position de ventilation ; et
- lorsqu'une pression de réserve (pV) fournie à l'électrovanne (12) tombe au-dessous d'une première valeur seuil : commuter pneumatiquement ou mécaniquement l'électrovanne (12) dans la position de purge.

15. Procédé selon la revendication 14, dans lequel l'électrovanne (12) présente une position préférentielle qui peut être annulée par l'évacuation d'une pression de commande de sécurité (pSS) au niveau d'un raccord de commande de sécurité (12.4) de l'électrovanne (12).

16. Procédé selon la revendication 14 ou 15, présentant l'étape consistant à :
- évacuer une pression de commande de sécurité (pSS) au niveau d'un raccord de commande de sécurité (12.4) de l'électrovanne (12) pour le maintien de l'électrovanne (12) dans la position de purge ou pour la commutation de l'électrovanne (12) dans la position de purge, dans lequel la pression de commande de sécurité (pSS) est une pression évacuée par l'électrovanne (12) ou dérivée de celle-ci.

17. Procédé selon l'une des revendications 14 à 16, présentant les étapes consistant à :
- évacuer une pression de relâchement d'urgence (pSN) pour la l'évacuation de la pression de frein de stationnement (pB) au niveau de l'au moins un raccord d'accumulateur à ressort (21).

18. Procédé selon la revendication 17, dans lequel la pression de relâchement d'urgence (pSN) est injectée dans un chemin de purge (44) de l'électrovanne (12).

19. Procédé selon la revendication 16 et 17, dans lequel la pression de relâchement d'urgence (pSN) est évacuée au niveau du raccord de commande de sécurité (12.4) de l'électrovanne (12) ou d'un autre raccord de commande de l'électrovanne (12).

20. Véhicule utilitaire (100) comportant un système de freinage pneumatique (102) à commande électronique qui présente un agencement de soupapes électropneumatique (1) selon l'une des revendications 1 à 13.
